# EUROPEAN PATENT SPECIFICATION

(11) **EP 0 375 298 B1**
(45) Date of publication and mention of the grant of the patent: **14.09.1994**
(21) Application number: 89313155.7
(22) Date of filing: 15.12.1989
(51) Int. Cl.: G11B 7/24

(54) **Optical information recording media**
Medium für optische Datenspeicherung
Milieu d'enregistrement optique d'information

(30) Priority: 17.12.1988 JP 318808/88
(43) Date of publication of application: 27.06.1990
(73) Proprietor: SONY CORPORATION, Tokyo 141 (JP); TAIYO YUDEN CO., LTD., Taito-ku Tokyo 110 (JP)
(72) Inventor: Arai, Yuji c/o Taiyo Yuden Co. Ltd., Taito-ku Tokyo (JP); Ogawa, Hiroshi c/o Patents Division Sony Corp., Shinagawa-ku Tokyo 141 (JP); Hotori, Masahiro c/o Patents Division Sony Corp., Shinagawa-ku Tokyo 141 (JP)
(74) Representative: Thomas, Christopher Hugo

(56) References cited:
- EP-A- 0 143 992
- JP-U- 5 749 734
- JP-U- 5 849 337
- Soviet Inventions Illustrated Section R:Electrical ,Week B11,27 April 1979Derwent Publications Ltd.,London GB
- SU 503288 (GUKALOV S.P)(21.04.76)

## Description

This invention relates to optical information recording media.

With an optical information recording medium in which a signal can be recorded and/or reproduced through a transparent substrate, a laser beam is focused on a recording surface from the transparent substrate side, thereby effecting the recording of an information signal. If a light incident surface of the transparent substrate is scratched or dirty or smudged, then a laser beam incident on the recording surface is hindered by scratches, dust or the like, so that, upon recording, pits cannot be accurately formed on the recording surface. Consequently, a recorded signal cannot be reproduced with high fidelity. In particular, in an optical information recording medium in which a transparent substrate is made of resin, such as polycarbonate, static electricity is produced on the light incident surface of the substrate, so that this surface attracts dust. Moreover, if the light incident surface of the transparent substrate is rubbed by something very hard or suffers shock, the surface of the transparent substrate may be scratched or damaged, making the above problem more serious.

To protect the light incident surface of the transparent substrate from dust and to protect the surface from being damaged, the following optical information recording media have been proposed in Japanese utility model laid-open gazettes nos. 60/60019, 57/49734 and 58/49337.

Japanese utility model laid-open gazette no 60/60019 proposes a magneto-optical recording medium in which a transparent plastics film cover is bonded around a centre hole only of an optical recording medium such as a compact disc, by means of a bonding agent. In this recording medium, however, as the transparent plastics cover is bonded only around the centre hole, the whole surface cannot be completely protected.

Japanese utility model laid-open gazette no 57/49734 proposes an optical recording medium in which a protective film is formed on the surface of a transparent protective layer of the optical recording medium, so that it can be stripped therefrom. In this recording medium, however, the protective film is not treated against static electricity. There is therefore a possibility that dust may adhere to the light incident surface of the optical recording medium due to static electricity, when the protective film is stripped from the surface of the transparent protective layer.

Japanese utility model laid-open gazette no 58/49337 proposes a recording medium in which a transparent film is formed with a bonding layer on a static electricity preventing layer formed by metalizing indium oxide, so that the transparent film can be stripped from the static electricity preventing layer. However, the multiple layers make the manufacture of the recording medium complex.

According to the invention there is provided an optical information recording medium comprising a transparent substrate and a recording layer and capable of recording information by irradiation of the recording layer with a laser beam from the transparent substrate side,
characterized by:
a protective film having a hygroscopic property formed on a light incident surface of the transparent substrate in such a manner that it can be stripped therefrom.

The recording layer can be made of organic dye-based optical recording material and the protective film can be coloured by a colourant of dark colour.

The protective film can be made of resin containing an antistatic agent.

The invention will now be described by way of example with reference to the accompanying drawings, throughout which like parts are referred to by like parts, and in which:
Figure 1 is a perspective view of an embodiment of optical disc according to the present invention; and
Figure 2 is a side view of a section of the optical disc.

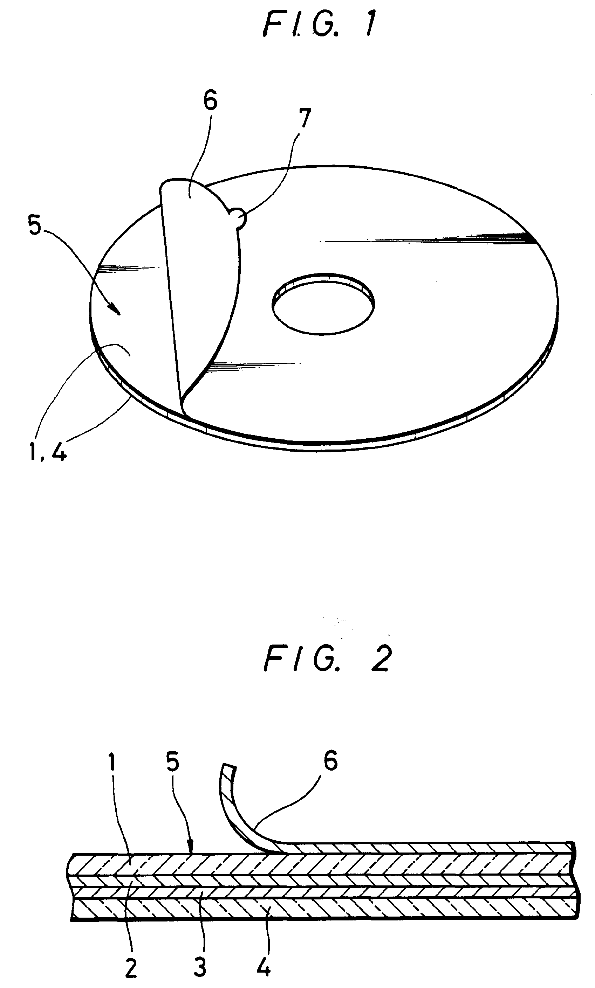

In Figures 1 and 2, it will be seen that an optical information recording medium comprises a transparent substrate 1, a recording layer 2, a reflecting layer 3, a protective layer 4, a light incident surface 5 of the transparent substrate 1 and a protective film 6.

The substrate 1 is preferably made of a synthetic resin plate, such as a polycarbonate resin plate, an acrylic resin plate or an epoxy resin plate, each having high optical transmissivity particularly for laser beams and having excellent shock resistance. The substrate 1 may be formed by a glass plate, and alternatively, the substrate 1 may be formed of a plurality of layers.

The recording layer 2 can record information thereon by a change in the optical characteristics of a portion which is not irradiated with a laser beam when the recording layer 2 is irradiated with a laser spot of a recording laser beam. The recording layer 2 is not restricted to a layer in which a physical change of shape, for example, a pit is produced. The recording layer 2 may be formed by uniformly coating, for example, cyanine-based dye, dissolved by a solvent, on the surface of the substrate 1 by means of a so-called spin-coating method. A light absorption layer, that is the recording layer 2, can achieve the effects of the present invention if it is made of a known optical recording material. In this case, it is preferable that the recording layer 2 be made of an organic dye-based optical recording material having a light absorption property. The recording layer 2 can be formed by means of well-known film forming methods, such as a vapour-deposition method or metalizing method, or a light bombardment method, in addition to the above-mentioned spin-coating method.

The reflecting layer 3 is laminated on the recording layer 2 by metalizing or sputtering a metal, such as gold, silver, copper, aluminium or an alloy thereof. If the reflecting layer 3 is provided as in the embodiment of the present invention, the recording can be effected by utilizing a laser beam reflected from the reflecting layer 3.

The protective layer 4 is laminated on the reflecting layer 3. The protective layer 4 is made of synthetic resin, such as ultraviolet-curing resin, epoxy resin, acrylic resin, or silicone-based hard coat resin, each having similar excellent shock resistance to that of the resin forming the substrate 1. The reflecting layer 3 and the protective layer 4 are not always provided, and may be selectively formed. Without the reflecting layer 3 and the protective layer 4, it is still possible to achieve the effects of the present invention.

The protective film 6 is made of a material having a hygroscopic property, so that static electricity can be prevented from being produced when the protective film 6 is stripped from the light incident surface 5. Thus, the light incident surface 5 of the transparent substrate 1 can be protected from being smudged by dust.

The protective film 6 can be given a hygroscopic property by using resin having a hydroxyl group or by mixing an antistatic agent into the material forming the protective film 6. A resin having a hydroxyl group may, for example, be polyvinyl alcohol. When a resin such as polyvinyl alcohol is used, the protective film 6 can easily be formed by the spin-coating method, and no bonding layer is required.

The antistatic agent mixed with the material of the protective film 6, may be a conductive material or a surface active agent. More specifically, examples of the surface active agent are as follows:

Amphoteric surface active agent which may, for example, be alkyl betaine, alkyl aminoxide or alkyl trimethyl ammonium salt; non-ionic surface active agent which may, for example, be polyoxyethylene alkyl amine; anion surface active agent which may, for example, be alkyl phosphate; cation surface active agent which may, for example, be alkyl amine acetate; and cyclohexane-based surface active agent which may, for example, be acrylic acid having a functional group or methacrylic acid polymer. It is possible to use an antistatic agent which is formed by mixing a plurality of the above-mentioned antistatic agents.

When the recording layer 2 is made of an organic dye-based optical recording material, it becomes possible to improve light resistance of the recording layer 2 by colouring the protective film 6. The protective film 6 can be coloured by mixing into the resin material of the protective film 6 a dark colour-based colourant, such as, of the protective film 6 a dark colour-based colourant, such as, Rhodamine B, Rhodamine 19, Brilliant Green or Methylene Blue.

The shape of the above-mentioned protective film 6 is determined in accordance with that of the transparent substrate 1. Even when the protective film 6 is formed so as to cover only the recording area of the recording layer 2, it is possible to achieve the effects of the present invention.

Furthermore, as shown in Figure 1, if one or more tabs 7 are provided at the edge of the protective film 6, then it becomes possible for the user easily to strip the protective film 6 from the light incident surface 5 using the tab 7. The tab 7 can be bonded to the protective film 6 after it has been formed.

The optical information recording medium was manufactured as follows. The transparent substrate 1 was moulded, by an injection moulding process, as a polycarbonate disc having a thickness of 1.2mm, an outer diameter of 120mm and an inner diameter of 15mm in which there are formed spiral-shaped pre-grooves having a width of 0.8µm, a depth of 0.08µm and a track pitch of 1.6µm in a range of a diameter of 46 to 117mm. In order to form on the transparent substrate 1 a light absorption layer which becomes the optical recording layer 2, 0.65g of 1, 1, dibutyl 3, 3, 3′, 3′ tetramethyl 4, 5, 4′, 5′ dibenzoindo dicarbocyanine perchlolate (product no. NK3219, manufactured by Nippon Kanko Shikiso Kabushiki Kaisha) was dissolved into 10ml of diacetone alcohol solvent. The resulting solution was coated on the surface of the substrate 1 by a spin-coating method, so a light absorption layer of 130nm thickness was formed. In the next process, an Au film of 70nm thickness was formed on the substrate 1 on which the light absorption layer was formed as the optical recording layer 2 over its whole surface of an area having a diameter of from 45 to 118mm by a metalizing process, thereby forming the reflecting layer 3. An ultraviolet curing resin was coated on the reflecting layer 3 by a spin-coating method, and was cured by the irradiation of ultraviolet rays, so the protective layer 4 of 10µm thickness was formed.

Then, the concentration of a polyvinyl alcohol aqueous solution was adjusted to be 12.5%, and the resulting solution was coated on the light incident surface 5 of the substrate 1 by spraying, left for five minutes, levelled by a levelling process and dried at 50°C for thirty on the light incident surface 5.

Although the protective film 6 remains bonded to the light incident surface 5 of the substrate 1 by its own bonding force, it can easily be stripped from the light incident surface 5 using the tab 7.

While the optical information recording medium is being delivered, transported, stored, bought by the user and the recording is made, the light incident surface 5 of the substrate 1 is protected. Also, the recording can be correctly made by stripping the protective film 6 from the light incident surface just before a laser beam is irradiated on the recording portion to record information.

Since the protective film 6 has a hydroxyl group and hygroscopic property, static electricity, caused by friction, can be prevented from being produced in the protective film 6 and the substrate 1. Thus, when the protective film 6 is provided or immediately after the protective film 6 is stripped from the light incident surface 5, the light incident surface 5 of the transparent substrate can be effectively protected from dust in the air.

## Claims

1. An optical information recording medium comprising a transparent substrate (1) and a recording layer (2) and capable of recording information by irradiation of the recording layer (2) with a laser beam from the transparent substrate side;
characterized by:
a protective film (6) having a hygroscopic property formed on a light incident surface (5) of the transparent substrate (1) in such a manner that it can be stripped therefrom.

2. A recording medium according to claim 1, wherein the protective film (6) is made of resin having a hydroxyl group.

3. A recording medium according to claim 2, wherein the protective film (6) is made of polyvinyl alcohol.

4. A recording medium according to claim 1 or claim 2, wherein the protective film (6) is coloured by a colourant of dark colour.

5. A recording medium according to claim 4, wherein the protective film (6) is made of an organic dye-based optical recording material.

6. A recording medium according to claim 1, wherein the recording layer (2) is made of organic dye-based optical recording material and the protective film (6) is coloured by a colourant of dark colour.

7. A recording medium according to claim 1, wherein the protective film (6) is made of resin containing an antistatic agent.

8. A recording medium according to claim 7, wherein the protective film (6) is made of resin having a hydroxyl group.

9. A recording medium according to claim 8, wherein the resin forming the protective film (6) is polyvinyl alcohol.

10. A recording medium according to claim 7, claim 8 or claim 9 wherein the protective film (6) is coloured by a colourant of dark colour.

11. A recording medium according to claim 10, wherein the recording layer (2) is made of organic dye-based optical recording material.

## Patentansprüche

1. Medium für die optische Informationsaufzeichnung
mit einem transparenten Substrat (1) und einer Aufzeichnungsschicht (2) zum Aufzeichnen von Informationen durch Bestrahlen der Aufzeichnungsschicht (2) mit einem Laserstrahl von der Seite des transparenten Substrats her,
**gekennzeichnet durch**
einen Schutzfilm (6) mit hygroskopischer Eigenschaft, der auf einer Lichteinfallsfläche (5) des transparenten Substrats (1) in der Weise ausgebildet ist, daß sie von diesem abzogen werden kann.

2. Aufzeichnungsmedium nach Anspruch 1, bei dem der Schutzfilm (6) aus einem Harz hergestellt ist, das eine Hydroxylgruppe aufweist.

3. Aufzeichnungsmedium nach Anspruch 2, bei dem der Schutzfilm (6) aus Polyvinylalkohol hergestellt ist.

4. Aufzeichnungsmedium nach Anspruch 1 oder 2, bei dem der Schutzfilm (6) mit einem Farbstoff von dunkler Farbe eingefärbt ist.

5. Aufzeichnungsmedium nach Anspruch 4, bei dem der Schutzfilm (6) aus einem organischen optischen Aufzeichnungsmaterial auf Farbstoffbasis hergestellt ist.

6. Aufzeichnungsmedium nach Anspruch 1, bei dem die Aufzeichnungsschicht (2) aus einem organischen optischen Aufzeichnungsmaterial auf Farbstoffbasis hergestellt ist und der Schutzfilm (6) mit einem Farbstoff von dunkler Farbe eingefärbt ist.

7. Aufzeichnungsmedium nach Anspruch 1 bei dem der Schutzfilm (6) aus einem Harz hergestellt ist, das einen antistatischen Wirkstoff enthält.

8. Aufzeichnungsmedium nach Anspruch 7, bei dem der Schutzfilm (6) aus einem Harz hergestellt ist, das eine Hydroxylgruppe aufweist.

9. Aufzeichnungsmedium nach Anspruch 8, bei dem das den Schutzfilm (6) bildende Harz Polyvinylalkohol ist.

10. Aufzeichnungsmedium nach Anspruch 7, 8 oder 9, bei dem der Schutzfilm (6) mit einem Farbstoff von dunkler Farbe eingefärbt ist.

11. Aufzeichnungsmedium nach Anspruch 10, bei dem die Aufzeichnungsschicht (2) aus einem organischen optischen Aufzeichnungsmaterial auf Farbstoffbasis hergestellt ist.

## Revendications

1. Support d'enregistrement optique d'informations comprenant un substrat transparent (1) et une couche d'enregistrement (2) et pouvant enregistrer des informations par irradiation de la couche d'enregistrement (2) avec un faisceau laser provenant du côté du substrat transparent ;
caractérisé par :
un film protecteur (6) ayant une propriété hygroscopique formé sur une surface d'incidence de la lumière (5) du substrat transparent (1) de telle sorte qu'il peut être retiré de celle-ci.

2. Support d'enregistrement selon la revendication 1 dans lequel le film protecteur (6) est constitué d'une résine comportant un groupe hydroxyle.

3. Support d'enregistrement selon la revendication 2, dans lequel le film protecteur (6) est constitué d'alcool polyvinylique.

4. Support d'enregistrement selon l'une quelconque des revendications 1 et 2, dans lequel le film protecteur (6) est coloré par un colorant de couleur sombre.

5. Support d'enregistrement selon la revendication 4, dans lequel le film protecteur (6) est constitué d'un matériau d'enregistrement optique à base de colorant organique.

6. Support d'enregistrement selon la revendication 1, dans lequel la couche d'enregistrement (2) est constituée d'un matériau d'enregistrement optique à base de colorant organique et le film protecteur (6) est coloré par un colorant de couleur sombre.

7. Support d'enregistrement selon la revendication 1, dans lequel le film protecteur (6) est constitué d'une résine contenant un agent antistatique.

8. Support d'enregistrement selon la revendication 7, dans lequel le film protecteur (6) est constitué d'une résine comportant un groupe hydroxyle.

9. Support d'enregistrement selon la revendication 8, dans lequel la résine constituant le film protecteur (6) est une résine d'alcool polyvinylique.

10. Support d'enregistrement selon l'une quelconque des revendications 7 à 9, dans lequel le film protecteur (6) est coloré par un colorant de couleur sombre.

11. Support d'enregistrement selon la revendication 10, dans lequel la couche d'enregistrement (2) est constituée d'un matériau d'enregistrement optique à base de colorant organique.
